# EUROPEAN PATENT SPECIFICATION

(11) **EP 3 779 545 B1**
(45) Date of publication and mention of the grant of the patent: **04.10.2023**
(21) Application number: 19910934.9
(22) Date of filing: 13.06.2019
(51) Int. Cl.: G02B 6/44

(54) **OPTICAL CABLE FIXING STRUCTURE AND OPTICAL CABLE CONNECTION DEVICE**
BEFESTIGUNGSSTRUKTUR FÜR OPTISCHE KABEL UND OPTISCHE KABELVERBINDUNGSVORRICHTUNG
STRUCTURE DE FIXATION DE CÂBLE OPTIQUE ET DISPOSITIF DE CONNEXION DE CÂBLE OPTIQUE

(43) Date of publication of application: 17.02.2021
(73) Proprietor: Huawei Technologies Co., Ltd., Longgang District Shenzhen, Guangdong 518129 (CN)
(72) Inventor: CHENG, Jian, Shenzhen, Guangdong 518129 (CN); YANG, Anliang, Shenzhen, Guangdong 518129 (CN); YU, Jianxiong, Shenzhen, Guangdong 518129 (CN)
(74) Representative: Körber, Martin Hans
(86) International application number: PCT/CN2019/091159
(87) International publication number: WO 2020/248199

(56) References cited:
- EP-A1- 3 105 626
- EP-A2- 1 710 882
- EP-B1- 3 105 626
- CN-A- 102 854 575
- CN-U- 202 886 688
- CN-U- 202 886 688
- CN-U- 205 826 927
- CN-U- 207 232 465
- CN-U- 207 232 465
- CN-Y- 201 203 682
- CN-Y- 201 203 682
- JP-A- H0 980 239
- US-A1- 2007 216 110
- US-A1- 2011 075 983

## Description

### TECHNICAL FIELD

This application relates to the field of optical communications technologies, and in particular, to an optical cable fastening structure and an optical cable connection apparatus.

### BACKGROUND

Fiber to the home (fiber to the home, FTTH) features a passive network, high bandwidth, diversified service carrying, flexible protocol support, and the like. Fiber to the home uses an optical fiber cable for laying out a line, and uses a fiber access terminal to manage individual subscriber cables. During management of the individual subscriber cables, when a subscriber has not activated service subscription, a fiber outlet on the fiber access terminal needs to be sealed, so that the fiber access terminal has an ingress protection rating (ingress protection rating, IP rating). However, after the subscriber activates service subscription, a subscriber cable passing through the fiber outlet further needs to be supported and fastened.

Document CN 202 886 688 U discloses a rubber-insulated fiber cable fixing device. The device comprises a basic body, clamping and plugging members, and a positioning structure. The basic body comprises left and right halves, which are connected with each other. Inner end faces of the left and right halves are provided with corresponding grooves. The positioning structure is disposed between the left and right halves of the basic body.

### SUMMARY

Embodiments of this application provide an optical cable fastening structure according to claim 1 and an optical cable connection apparatus according to claim 15, to make a fiber access terminal has an IP rating and support and fasten a subscriber cable passing through a fiber outlet, based on whether a subscriber has a requirement for service subscription activation.

To achieve the foregoing objectives, the following technical solutions are used in the embodiments of this application.

According to a first aspect of the embodiments of this application, an optical cable fastening structure is provided. The optical cable fastening structure includes a first clamping member, a second clamping member, a fastener, a tearing member, and a protective cover. A first cable-through structure is provided on a first fitting surface that is of the first clamping member and that is configured to fasten an optical cable. A second cable-through structure is provided on a second fitting surface that is of the second clamping member and that is configured to fasten the optical cable. The first clamping member and the second clamping member are joined and detachably connected by using the fastener. At least a part of the first fitting surface of the first clamping member comes into contact with at least a part of the second fitting surface of the second clamping member under the action of the fastener, and the first cable-through structure and the second cable-through structure are docked, to form an optical cable through hole for the optical cable to pass through. The optical cable through hole is in interference fit with the optical cable. In addition, the tearing member is connected to a first end face that is of the first clamping member. One part of the protective cover is connected to the tearing member, the other part of the protective cover protrudes from the first end face, and the protective cover covers an opening of the optical cable through hole when the first clamping member and the second clamping member are joined by using the fastener. The tearing member is strip-shaped and is disposed along the edge of the protective cover such that the protective cover is torn off at the location of the tearing member. The tearing member and the protective cover seal the optical cable through hole. In a process of implementing fiber to the premises, when a subscriber has not activated service subscription, the tearing member and the protective cover are used to seal off the optical cable through hole, so that a subscriber cable cannot thread through a fiber outlet on a housing of an optical cable connection apparatus by passing through the optical cable fastening structure. This can implement sealing inside the optical cable connection apparatus, thereby implementing a protection function. In addition, when the subscriber activates service subscription, a constructor tear off the protective cover at a location of the tearing member, to expose the opening of the optical cable through hole originally sealed off by the protective cover, so that the subscriber cable threads through a box of the optical cable connection apparatus and is connected to an optical fiber inlet of one subscriber. All of components, that is, the protective cover, the tearing member, a cladding member, the first clamping member, and the second clamping member, in the optical cable fastening structure may be made of plastic materials, so that the components in the optical cable fastening structure formed by using a one-time composition technique constitute an integrated structure. The optical cable fastening structure having the integrated structure can reduce a probability of a component being missing in a process of constructing or maintaining the optical cable connection apparatus by the constructor.

Optionally, the first clamping member and the second clamping member are joined, and the part that is of the protective cover and that protrudes from the first end face comes into contact with a second end face that is of the second clamping member and that is configured to lead out the optical cable. This can improve a sealing effect of the protective cover on the optical cable through hole formed after the first clamping member and the second clamping member are joined.

Optionally, the optical cable fastening structure further includes a cladding member. The cladding member is connected to the part that is of the protective cover and that protrudes from the first end face. The cladding member is configured to: when the first clamping member and the second clamping member are joined, cover a surface that is of the second clamping member and that is far away from the second fitting surface. The cladding member is disposed, so that when the first clamping member and the second clamping member are joined, the cladding member can come into contact with the surface that is of the second clamping member and that is far away from the second fitting surface. This improves a sealing effect on the optical cable through hole formed after the first clamping member and the second clamping member are joined.

Optionally, the cladding member is strip-shaped and is disposed along an edge of the protective cover. In this way, after the first clamping member and the second clamping member are joined, the strip-shaped cladding member located at the edge of the protective cover may cover the second clamping member along an outer surface of the second clamping member. This can increase a contact area between the cladding member and the outer surface of the second clamping member, thereby improving a sealing effect on the optical cable through hole.

The tearing member is strip-shaped and is disposed along the edge of the protective cover. In this way, when the protective cover is connected to the tearing member, the tearing member is also at an edge location of the protective cover. Therefore, a contact area between a finger of the constructor and the protective cover is increased, and it is easier to exert force on the protective cover. This helps tear off the protective cover.

Optionally, when the cladding member is strip-shaped and is disposed along the edge of the protective cover, a first end of the cladding member covers a first end of the tearing member, and a second end of the cladding member covers a second end of the tearing member. In this way, an assembly including the tearing member and the cladding member that are connected to the protective cover can fully encircle a periphery at which the first clamping member and the second clamping member are joined and are close to an end of the protective cover, so that the optical cable through hole formed between the first clamping member and the second clamping member is better sealed off at the opening close to an end of the protective cover.

Optionally, in a cabling direction of the optical cable, a thickness of the tearing member is less than a thickness of the protective cover. In this way, strength of a material of the tearing member with the smaller thickness is decreased, so that the constructor tears off the protective cover more easily.

Optionally, an end that is of the protective cover and that is far away from the first clamping member and the second clamping member is provided with a chamfer. In this way, when the constructor threads, from a bottom case through the fiber outlet, an end that is of the optical cable fastening structure and that has the protective cover, the entire optical cable fastening structure can enter the fiber outlet more easily under the guidance action of the chamfer.

Optionally, the fastener includes a clip and a slot that are buckled. The clip is connected to the first clamping member and the slot is located on the second fitting surface; or the clip is connected to the second clamping member and the slot is located on the first fitting surface. After the first clamping member and the second clamping member are joined, the clip connected to the first clamping member is clamped to the slot and is in interference fit with the slot, so that the first clamping member and the second clamping member are connected. Alternatively, when the first clamping member and the second clamping member need to be separated from each other, the clip may be removed from the slot under the action of external force exerted by the constructor, to separate the first clamping member from the second clamping member.

Optionally, the first cable-through structure includes a first groove, a first cabling groove, and a first cable clip groove. The first groove is disposed on the first fitting surface, and includes a first outlet sidewall close to the protective cover and a first inlet sidewall far away from the protective cover. The first cabling groove is disposed on the first outlet sidewall and is connected to the first groove. The first cable clip groove is disposed on the first inlet sidewall and is connected to the first groove. The second cable-through structure includes a second groove, a second cabling groove, and a second cable clip groove. The second groove is disposed on the second fitting surface, and includes a second outlet sidewall close to the protective cover and a second inlet sidewall far away from the protective cover. The second cabling groove is disposed on the second outlet sidewall and is connected to the second groove. The second cable clip groove is disposed on the second inlet sidewall and is connected to the second groove. A via formed after the first cabling groove and the second cabling groove are docked is in clearance fit with the optical cable, so that the subscriber cable can conveniently thread through the optical cable fastening structure. A shape of the via formed after the first cabling groove and the second cabling groove are docked may match a cross sectional shape of the subscriber cable. In addition, the optical cable fastening structure further includes at least one first stopper bump that is disposed on a groove bottom of the first cable clip groove and a groove bottom of the second cable clip groove. The first stopper bump is configured to perform location limiting on the optical cable, so that a via formed after the first cable clip groove having the first stopper bump and the second cable clip groove having the first stopper bump are docked is in interference fit with the optical cable. In this way, a location of the subscriber cable can be fastened by using the via formed after the first cable clip groove having the first stopper bump and the second cable clip groove having the first stopper bump are docked.

Optionally, the first cable-through structure further includes at least one first stiffener and at least one third cable clip groove. The first stiffener is located inside the first groove, and the first stiffener is disposed in parallel to the first outlet sidewall. One third cable clip groove is disposed on one first stiffener and is connected to the first groove. In addition, the second cable-through structure further includes at least one second stiffener and at least one fourth cable clip groove. The second stiffener is located inside the second groove, and the second stiffener is disposed in parallel to the second outlet sidewall. One fourth cable clip groove is disposed on one second stiffener and is connected to the second groove. The optical cable fastening structure further includes at least one first stopper bump that is disposed on a groove bottom of the third cable clip groove and a groove bottom of the fourth cable clip groove. The first stopper bump is configured to perform location limiting on the optical cable, so that a via formed after the third cable clip groove having the first stopper bump and the fourth cable clip groove having the first stopper bump are docked is in interference fit with the optical cable. In this way, the location of the subscriber cable can further be fastened by using the via formed after the third cable clip groove having the first stopper bump and the fourth cable clip groove having the first stopper bump are docked.

Optionally, a longitudinal cross-section of the first stopper bump is a trapezoid, a triangle, or a rectangle. The longitudinal cross-section is perpendicular to a cabling direction of the optical cable.

Optionally, the optical cable fastening structure further includes a plurality of second stopper bumps. The second stopper bump is disposed on a part, configured to be in fit with a fiber outlet, in a surface that is of the first clamping member and that is far away from the first fitting surface; and is disposed on a part, configured to be in fit with the fiber outlet, in the surface that is of the second clamping member and that is far away from the second fitting surface. In this way, after the optical cable fastening structure is installed in the fiber outlet on the bottom case, location limiting is performed for the optical cable fastening structure, to reduce a probability that movement occurs in the optical cable fastening structure.

Optionally, the optical cable fastening structure further includes a connection strip. The connection strip is located between the first clamping member and the second clamping member, one end of the connection strip is connected to the first clamping member, and the other end of the connection strip is connected to the second clamping member. In this way, when the first clamping member is separated from the slot on the second clamping member, the first clamping member and the second clamping member can still be connected by using the connection strip. This reduces a probability of a component being missing in a process of constructing or maintaining the optical cable connection apparatus by the constructor.

Optionally, the optical cable fastening structure further includes an opening groove. The opening groove is disposed on the first fitting surface, the first clamping member and the second clamping member are joined, and there is a gap between a groove bottom of the opening groove and the second fitting surface; or the opening groove is disposed on the second fitting surface, the first clamping member and the second clamping member are joined, and there is a gap between a groove bottom of the opening groove and the first fitting surface. In this case, when the first clamping member and the second clamping member are joined, there is a gap between the groove bottom of the opening groove and the second fitting surface of the second clamping member. In this way, the constructor can insert an external tool such as a screwdriver into the gap; and then, exert external force on the screwdriver, to remove the clip from the slot, thereby separating the first clamping member from the second clamping member.

According to a second aspect of the embodiments of this application, an optical cable connection apparatus is provided. The optical cable connection apparatus includes a box, at least one fiber outlet disposed on the box, and at least one of the optical cable fastening structures described above. One optical cable fastening structure is in fit with one fiber outlet. An end at which a protective cover is located in the optical cable fastening structure is located outside the box. Technical effects of the optical cable connection apparatus are the same as those of the optical cable fastening structure provided in the foregoing embodiment. Details are not described herein again.

### BRIEF DESCRIPTION OF DRAWINGS

FIG. 1 is a schematic structural diagram of an optical cable connection apparatus according to an embodiment of this application;
FIG. 2 is a schematic diagram of an optical cable fastening structure in FIG. 1;
FIG. 3 is a cutaway view obtained through cutting along a dashed line O1-O1 shown in FIG. 2;
FIG. 4 is a cutaway view obtained through cutting along a dashed line O2-O2 shown in FIG. 2;
FIG. 5 is a schematic structural diagram of an optical cable fastening structure according to an embodiment of this application;
FIG. 6 is a schematic structural diagram obtained along a direction B shown in FIG. 3;
FIG. 7 is another schematic structural diagram of an optical cable fastening structure according to an embodiment of this application;
FIG. 8a is a schematic structural diagram of a tearing member in FIG. 7;
FIG. 8b is schematic structural diagram of a tearing member in FIG. 7 not according to the invention;
FIG. 9a is another schematic structural diagram of an optical cable fastening structure according to an embodiment of this application;
FIG. 9b is a schematic diagram of an installation location of an optical cable fastening structure in an optical cable connection apparatus according to an embodiment of this application;
FIG. 9c is a schematic diagram of an installation location of an optical cable fastening structure in an optical cable connection apparatus according to an embodiment of this application;
FIG. 9d is another schematic structural diagram of an optical cable fastening structure according to an embodiment of this application;
FIG. 9e is another schematic structural diagram of an optical cable fastening structure according to an embodiment of this application;
FIG. 10 is another schematic structural diagram of an optical cable fastening structure according to an embodiment of this application;
FIG. 11a is another cutaway view obtained through cutting along a dashed line O1-O1 shown in FIG. 2;
FIG. 11b is another cutaway view obtained through cutting along a dashed line O1-O1 shown in FIG. 2;
FIG. 12a is another cutaway view obtained through cutting along a dashed line O1-O1 shown in FIG. 2;
FIG. 12b is a schematic diagram of an optical cable fastening structure including a tearing member and a cladding member;
FIG. 12c is another schematic diagram of an optical cable fastening structure including a tearing member and a cladding member;
FIG. 13 is schematic structural diagram of an optical cable fastening structure not according to the invention;
FIG. 14 is another schematic structural diagram of an optical cable fastening structure according to an embodiment of this application;
FIG. 15a is a schematic diagram of an optical cable fastening structure after a first clamping member and a second clamping member are joined according to an embodiment of this application;
FIG. 15b is another schematic diagram of an optical cable fastening structure after a first clamping member and a second clamping member are joined according to an embodiment of this application;
FIG. 16a is another schematic structural diagram of an optical cable fastening structure according to an embodiment of this application;
FIG. 16b is another schematic structural diagram of an optical cable fastening structure according to an embodiment of this application; and
FIG. 17 is another schematic structural diagram of an optical cable fastening structure according to an embodiment of this application.

### Reference numerals in the drawings:

01: Optical cable connection apparatus; 10: upper cover; 11: bottom case; 100: optical cable hole; 101: fiber outlet; 20: optical cable fastening structure; 201: first clamping member; 202: second clamping member; 200: optical cable through hole; 204: tearing member; 205: protective cover; 203: fastener; 213: clip; 223: slot; 24: connection strip; 23: opening groove; 2041: joint pin; 29: second stopper bump; 25: cladding member; 26: rubber part; 27: plastic part; 210: first groove; 211: first cabling groove; 212: first cable clip groove; 280: first outlet sidewall; 281: first inlet sidewall; 220: second groove; 221: second cabling groove; 222: second cable clip groove; 282: second outlet sidewall; 283: second inlet sidewall; 28: via; 290: first stopper bump; 214: first stiffener; 215: third cable clip groove; 224: second stiffener; 225: fourth cable clip groove.

### DESCRIPTION OF EMBODIMENTS

The following terms "first" and "second" are merely intended for a purpose of description, and shall not be understood as an indication or implication of relative importance or implicit indication of the number of indicated technical features. Therefore, a feature limited by "first" or "second" may explicitly or implicitly include one or more features. In the description of the embodiment of this application, unless otherwise stated, "multiple" means two or more than two.

In addition, nouns of locality such as "upper", "lower", "left", and "right" in this application are defined based on illustrated directions in which components in the accompanying drawings are placed. It should be understood that these directional terms are relative concepts used to describe and clarify "relative to", and may accordingly vary with changes of the directions in which the components in the accompanying drawings are placed.

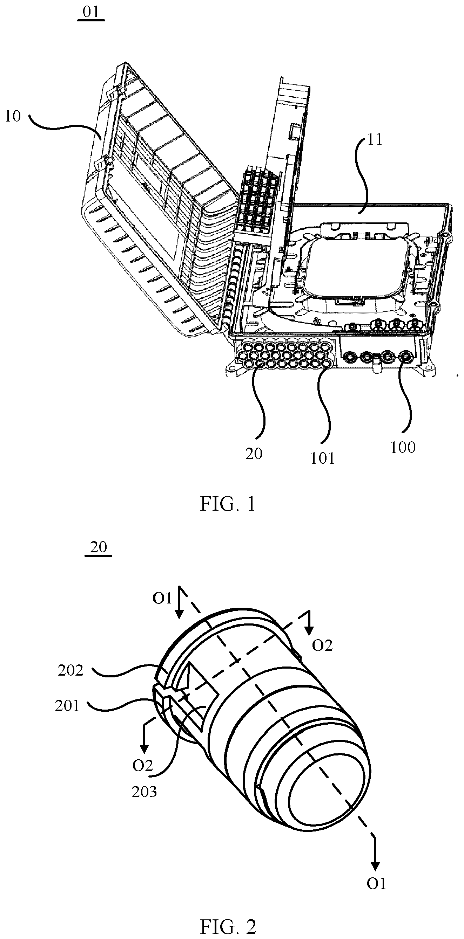

In this application, unless otherwise clearly specified and limited, the term "connection" should be interpreted in a broad sense. For example, "connection" may be a fixed connection, may be a detachable connection, or may mean an integrated structure; and may be a direct connection, or may be an indirect connection through an intermediary. An embodiment of this application provides an optical cable connection apparatus. The optical cable connection apparatus may be a fiber access terminal (fiber access terminal, FAT), a splitting and splicing closure (splitting and splicing closure, SSC), a terminal box (terminal box, TB), or the like, or may be another case or box that can be applied to an optical distribution network (optical distribution network, ODN). A specific form of the optical cable connection apparatus is not particularly limited in this embodiment of this application. For ease of description, the following uses an example in which the optical cable connection apparatus 01 is a fiber access terminal shown in FIG. 1 for description.

In this case, the optical cable connection apparatus 01 includes an upper cover 10 and a bottom case 11, and a box of the optical cable connection apparatus 01 is formed after the upper cover 10 and the bottom case 11 are joined. A plurality of optical cable holes 100 and a plurality of fiber outlets 101 are disposed on the box, for example, on the bottom case 11.

When an optical cable, which is referred to as a main cable below, provided by an optical cable provider is connected to a subscriber optical fiber inlet, a constructor first needs to thread the main cable into the optical cable connection apparatus 01 through the optical cable hole 100; next, splits a drop fiber from the main cable located inside the optical cable connection apparatus 01; and then, performs cable distribution and optical splitting on the optical fiber inside the optical cable connection apparatus 01, or splices the optical fiber with a distribution optical cable, and finally provides each fiber outlet 101 with one optical cable, which is referred to as a subscriber cable below. Each subscriber cable is configured to connect to an optical fiber inlet of one subscriber, to achieve an objective of fiber to the premises.

Based on this, when a subscriber has not activated service subscription, the fiber outlet 101 on the optical cable connection apparatus 01 needs to be sealed, so that the optical cable connection apparatus 01 has an IP rating. After the subscriber activates service subscription, the subscriber cable passing through the fiber outlet 101 needs to be supported and fastened. In view of this, the optical cable connection apparatus 01 provided in this embodiment of this application further includes a plurality of optical cable fastening structures 20. One optical cable fastening structure 20 is located inside the fiber outlet 101 shown in FIG. 1, and is in fit with the fiber outlet 101.

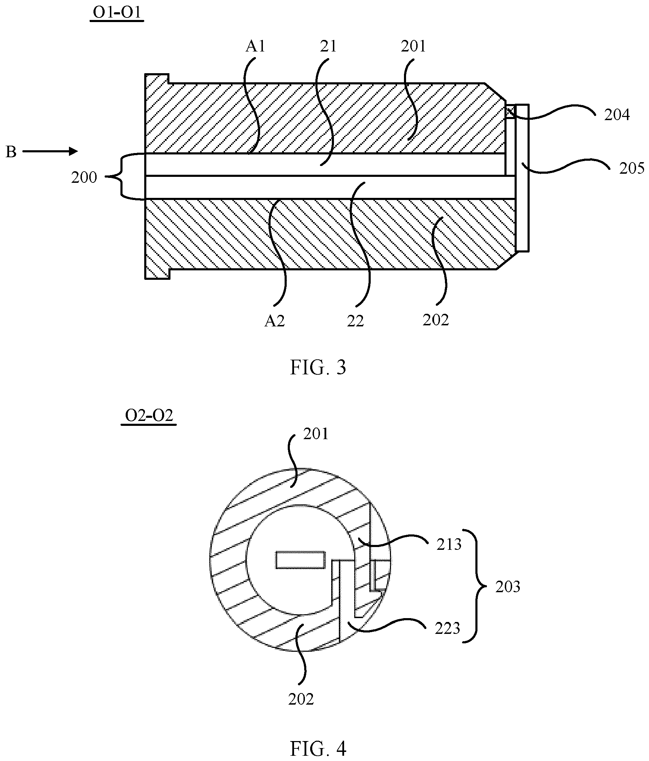

A structure of the optical cable fastening structure 20 is shown in FIG. 2, including a first clamping member 201 and a second clamping member 202 that are joined. In addition, as shown in FIG. 3 (a cutaway view obtained through cutting along a dashed line O1-O1 in FIG. 2), a first fitting surface A1 of the first clamping member 201 has a first cable-through structure 21, and a second fitting surface A2 of the second clamping member 202 has a second cable-through structure 22.

In this case, after the first clamping member 201 and the second clamping member 202 are joined, the first cable-through structure 21 and the second cable-through structure 22 are docked, to form an optical cable through hole 200 for the subscriber cable to pass through. The optical cable through hole 200 is in interference fit with the subscriber cable.

It should be noted that after the first clamping member 201 and the second clamping member 202 are joined, the first fitting surface A1 of the first clamping member 201 is a surface that is of the first clamping member 201 and that faces the second clamping member 202, and the second fitting surface A2 of the second clamping member 202 is a surface that is of the second clamping member 202 and that faces the first clamping member 201. In this way, after the first clamping member 201 and the second clamping member 202 are joined, at least a part of the first fitting surface A1 comes into contact with at least a part of the second fitting surface A2, so that the optical cable (that is, the foregoing subscriber cable) is fastened to the optical cable through hole 200 between the first clamping member 201 and the second clamping member 202. Therefore, in this embodiment of this application, the first fitting surface A1 is referred to as a surface, of the first clamping member 201, configured to fasten the subscriber cable, and the second fitting surface A2 is referred to as a surface, of the second clamping member 202, configured to fasten the subscriber cable.

In addition, after the first clamping member 201 and the second clamping member 202 are joined, to fix locations of the first clamping member 201 and the second clamping member 202, the optical cable fastening structure 20 further includes a fastener 203 shown in FIG. 2.

The first clamping member 201 and the second clamping member 202 be joined and detachably connected by using the fastener 203. After the first clamping member 201 is connected to the second clamping member 202 by using the fastener 203, at least a part of the first fitting surface A1 of the first clamping member 201 comes into contact with at least a part of the second fitting surface A2 of the second clamping member 202 under the action of the fastener 203, and the first cable-through structure 21 on the first clamping member 201 and the second cable-through structure 22 on the second clamping member 202 are docked, to form the optical cable through hole 200.

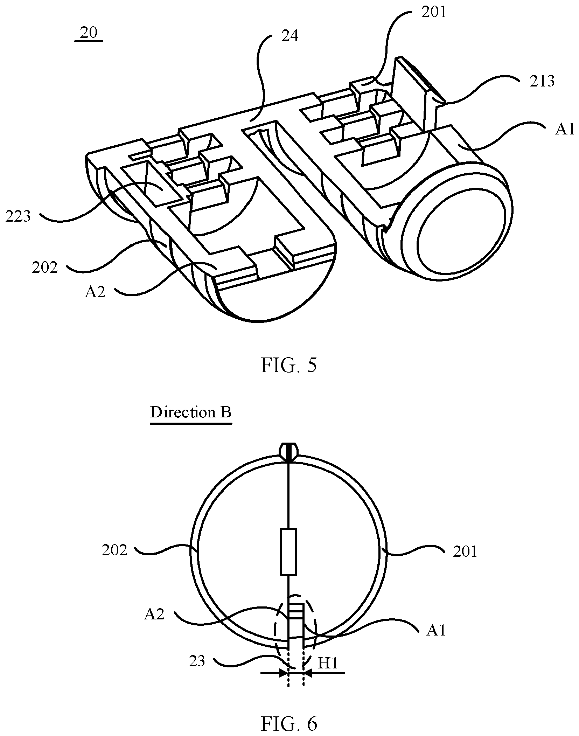

For example, the fastener 203 includes a clip 213 and a slot 223 that are buckled, as shown in FIG. 4 (a cutaway view obtained through cutting along a dashed line O2-O2 shown in FIG. 2). In some embodiments of this application, as shown in FIG. 5, the clip 213 is connected to the first clamping member 201, and the slot 223 is located on the second fitting surface A2 of the second clamping member 202. The clip 213 is in fit with the slot 223 to implement a detachable connection between the first clamping member 201 and the second clamping member 202.

For example, after the first clamping member 201 and the second clamping member 202 are joined, the clip 213 connected to the first clamping member 201 is clamped to the slot 223 and is in interference fit with the slot 223, so that the first clamping member 201 and the second clamping member 202 are connected.

Alternatively, when the first clamping member 201 and the second clamping member 202 need to be separated from each other, the clip 213 may be removed from the slot 223 under the action of external force exerted by the constructor, to separate the first clamping member 201 from the second clamping member 202.

In some other embodiments of this application, the clip 213 may be connected to the second clamping member 202, and the slot 223 may be located on the first fitting surface A1 of the first clamping member 201. In this case, a process of implementing a detachable connection between the first clamping member 201 and the second clamping member 202 by using the fastener 203 including the clip 213 and the slot 223 is the same as that described above. Details are not described herein again.

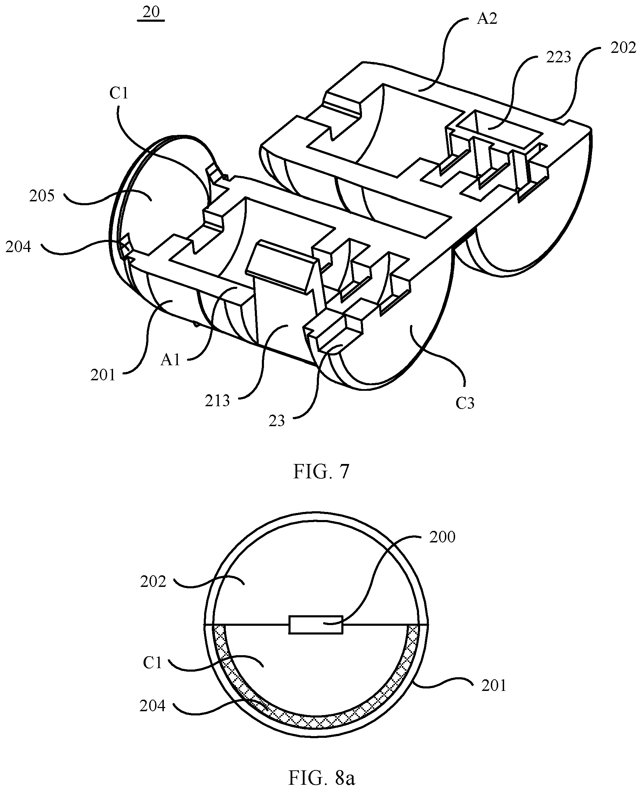

In addition, to help the constructor exert external force to separate the first clamping member 201 from the second clamping member 202, as shown in FIG. 6 (a schematic diagram obtained along a direction B shown in FIG. 3), the optical cable fastening structure 20 further includes an opening groove 23. For example, as shown in FIG. 7, the opening groove 23 may be disposed on the first fitting surface A1 of the first clamping member 201. In other words, a notch that dents inwards is formed on the first fitting surface A1, and is used as the opening groove 23.

In this case, when the first clamping member 201 and the second clamping member 202 are joined, as shown in FIG. 6, there is a gap H1 between a groove bottom (located inside the first fitting surface A1 of the first clamping member 201) of the opening groove 23 and the second fitting surface A2 of the second clamping member 202. In this way, the constructor can insert an external tool such as a screwdriver into the gap H1; and then, exert external force on the screwdriver, to remove the clip 213 from the slot 223, thereby separating the first clamping member 201 from the second clamping member 202.

Alternatively, in some other embodiments of this application, the opening groove 23 may be disposed on the second fitting surface A2 of the second clamping member 202. In other words, a notch that dents inwards is formed on the second fitting surface A2, and is used as the opening groove 23. In this case, when the first clamping member 201 and the second clamping member 202 are joined, there is the gap H1 between a groove bottom (located inside the second fitting surface A2 of the second clamping member 202) of the opening groove 23 and the first fitting surface A1 of the first clamping member 201.

It can be learnt from the foregoing that the first clamping member 201 and the second clamping member 202 may be separated from each other under the action of external force. In this case, to reduce a probability of the first clamping member 201 or the second clamping member 202 being missing after the first clamping member 201 is separated from the second clamping member 202, as shown in FIG. 5, the optical cable fastening structure further includes a connection strip 24.

The connection strip 24 is located between the first clamping member 201 and the second clamping member 202, one end of the connection strip 24 is connected to the first clamping member 201, and the other end of the connection strip 24 is connected to the second clamping member 202. In this way, when the clip 213 connected to the first clamping member 201 is removed, under the action of external force, from the slot 223 disposed on the second clamping member 202, the first fitting surface A1 of the first clamping member 201 is no longer in contact with the second fitting surface A2 of the second clamping member 202. In this case, the first clamping member 201 and the second clamping member 202 can still be connected by using the connection strip 24. This reduces a probability of a component being missing in a process of constructing or maintaining the optical cable connection apparatus 01 by the constructor.

In some embodiments of this application, the first clamping member 201, the second clamping member 202, and the connection strip 24 may be made of injection molding materials. In this way, an injection mold is designed, to use a one-time injection molding process to manufacture the optical cable fastening structure 20 in which the first clamping member 201, the second clamping member 202, and the connection strip 24 constitute an integrated structure.

Based on this, when fiber to the home is being implemented, if the subscriber has not activated service subscription, to seal the fiber outlet 101 on the optical cable connection apparatus 01, as shown in FIG. 7, the optical cable fastening structure 20 further includes a tearing member 204 and a protective cover 205.

The tearing member 204 is connected to a first end face C1 that is of the first clamping member 201. In some embodiments of this application, as shown in FIG. 8a, when the first clamping member 201 and the second clamping member 202 are joined, the tearing member 204 may be located around an opening of the optical cable through hole 200 that is formed after the first cable-through structure 21 and the second cable-through structure 22 shown in FIG. 3 are docked and that is used for the subscriber cable to pass through.

In addition, as shown in FIG. 7, one part of the protective cover 205 is connected to the tearing member 204, the other part of the protective cover 205 protrudes from the first end face C1, and the protective cover 205 can cover the opening of the optical cable through hole 200 (as shown in FIG. 8a) when the first clamping member 201 and the second clamping member 202 are joined by using the fastener 203. Moreover, the tearing member 204 and the protective cover 205 further seal the optical cable through hole 200. In this way, when the subscriber does not need to activate service subscription, the protective cover 205 is used to seal off the optical cable through hole 200, so that the subscriber cable cannot thread through the fiber outlet 101 on a housing of the optical cable connection apparatus 01 by using the optical cable fastening structure 20. This can implement sealing inside the optical cable connection apparatus 01, so that the optical cable connection apparatus 01 has the IP rating.

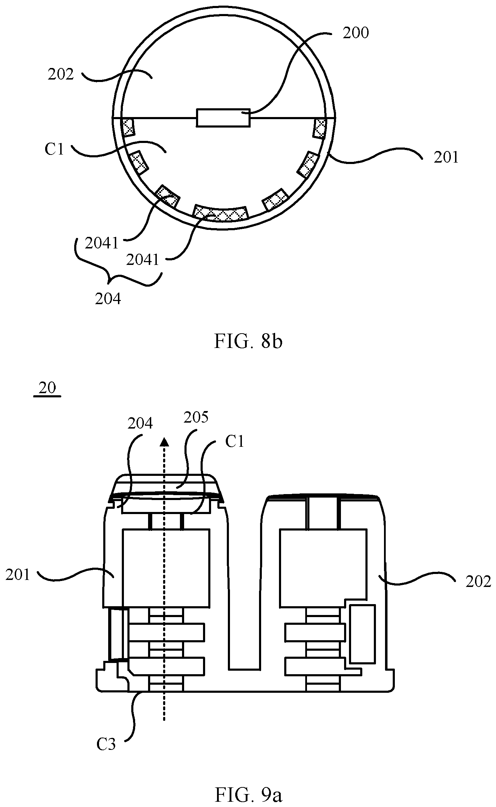

It should be noted that, as shown in FIG. 9a, the first end face C1 in the first clamping member 201 is disposed opposite to a third end face C3, and the first end face C1 and the third end face C3 intersect with, for example, are perpendicular to, a cabling direction of the subscriber cable (a direction indicated by a dotted arrow in FIG. 9a).

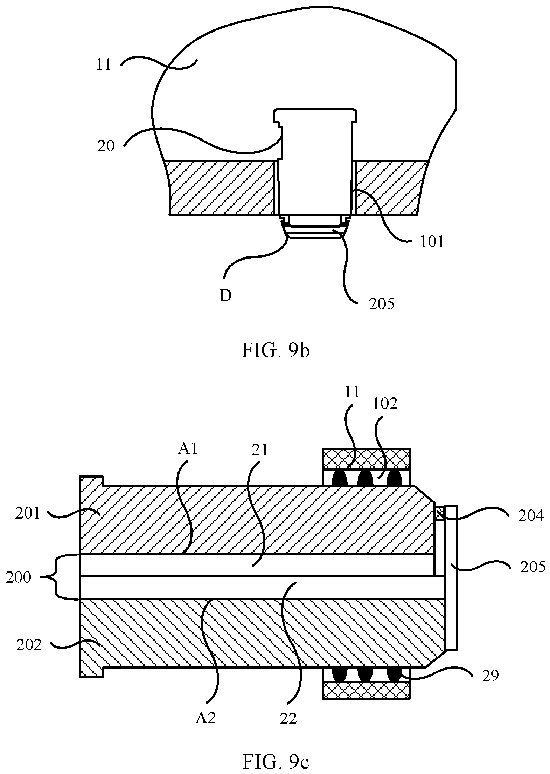

In addition, as shown in FIG. 9b, when the optical cable fastening structure 20 is installed in the fiber outlet 101 on the bottom case 11, an end at which the protective cover 205 is located in the optical cable fastening structure 20 is located outside the bottom case 11. Therefore, in this application, the first end face C1, shown in FIG. 9a, that is in the first clamping member 201 and that is connected to the protective cover 205 by using the tearing member 204 is referred to as an end, of the first clamping member 201, used for threading the optical cable. Because the first end face C1 is disposed opposite to the third end face C3, the third end face C3 is an end, of the first clamping member 201, used for penetrating into the optical cable.

Based on this, to facilitate installation of the optical cable fastening structure 20 in the fiber outlet 101 on the bottom case 11, as shown in FIG. 9b, a chamfer D is disposed on an end that is of the protective cover 205 and that is far away from the bottom case 11 or is far away from the first clamping member 201 and the second clamping member 202 in the optical cable fastening structure 20. For example, the chamfer D may be 45°.

In this way, when the constructor threads, from the bottom case 11 through the fiber outlet 101, an end that is of the optical cable fastening structure 20 and that has the protective cover 205, the entire optical cable fastening structure 20 can enter the fiber outlet 101 more easily under the guidance action of the chamfer D.

In addition, after the optical cable fastening structure 20 is installed in the fiber outlet 101 on the bottom case 11, to perform location limiting for the optical cable fastening structure 20 to reduce a probability that movement occurs in the optical cable fastening structure 20, the optical cable fastening structure 20 further includes a plurality of second stopper bumps 29 shown in FIG. 9c.

The second stopper bump 29 is disposed on a part, configured to be in fit with the fiber outlet 101, in a surface that is of the first clamping member 201 and that is far away from the first fitting surface A1. In addition, the second stopper bump 29 is also disposed on a part, configured to be in fit with the fiber outlet 101, in a surface that is of the second clamping member 202 and that is far away from the second fitting surface A2.

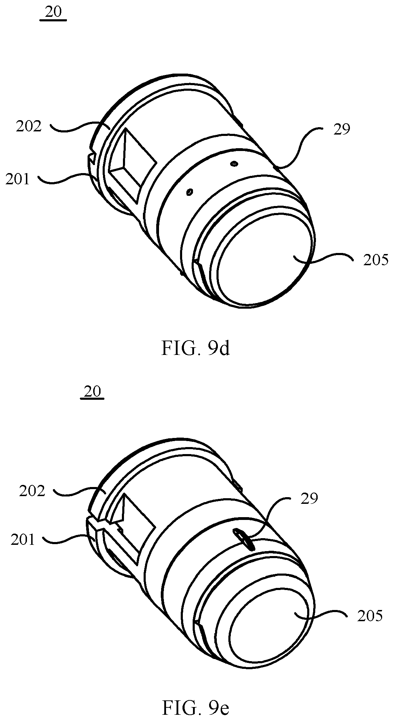

In some embodiments of this application, as shown in FIG. 9d, the second stopper bump 29 may be a protruding point. Alternatively, in some other embodiments of this application, as shown in FIG. 9e, the second stopper bump 29 may be a strip-shaped convex rib.

It should be noted that the foregoing uses an example for description in which the fiber outlet 101 is circular-shaped. In this case, to be in fit with the shape of the fiber outlet 101, the first clamping member 201 and the second clamping member 202 are semi-cylinders shown in FIG. 7, so that the optical cable fastening structure 20 formed after the first clamping member 201 and the second clamping member 202 are joined is a cylinder shown in FIG. 9e.

It can be learnt from the foregoing that the protective cover 205 and the tearing member 204 that are used to seal off the opening of the optical cable through hole 200 through which the subscriber cable passes are connected to each other. In this way, when the subscriber needs to activate service subscription, the constructor tears off the protective cover 205 at a location of the tearing member 204, to expose the opening of the optical cable through hole 200 originally sealed off by the protective cover 205, so that the subscriber cable threads through the box of the optical cable connection apparatus 01 and is connected to an optical fiber inlet of one subscriber.

To help tear off the protective cover 205, according to the invention, as shown in FIG. 8a, the tearing member 204 is strip-shaped and is disposed along an edge of the first end face C1 (an end face facing the protective cover) in the first clamping member 201. In this way, when the protective cover 205 is connected to the tearing member 204, the tearing member 204 is also at an edge location of the protective cover 205. Therefore, a contact area between a finger of the constructor and the protective cover 205 is increased, and it is easier to exert force on the protective cover 205. This helps tear off the protective cover 205.

Alternatively, other embodiments not according to the invention, as shown in FIG. 8b, the tearing member 204 may be at least two joint pins 2041 spaced apart. The joint pins 2041 may be located at an edge of the first end face C1 of the first clamping member 201, so that when the protective cover 205 is connected to the tearing member 204, the joint pins 2041 in the tearing member 204 are also at an edge location of the protective cover 205. This helps the constructor tear off the protective cover 205.

In addition, because the at least two joint pins 2041 in the tearing member 204 are spaced apart, there is a gap between two adjacent joint pins 2041. In this way, a contact area between the entire tearing member 204 and the protective cover 205 can be reduced, so that the constructor tears off the protective cover 205 more easily.

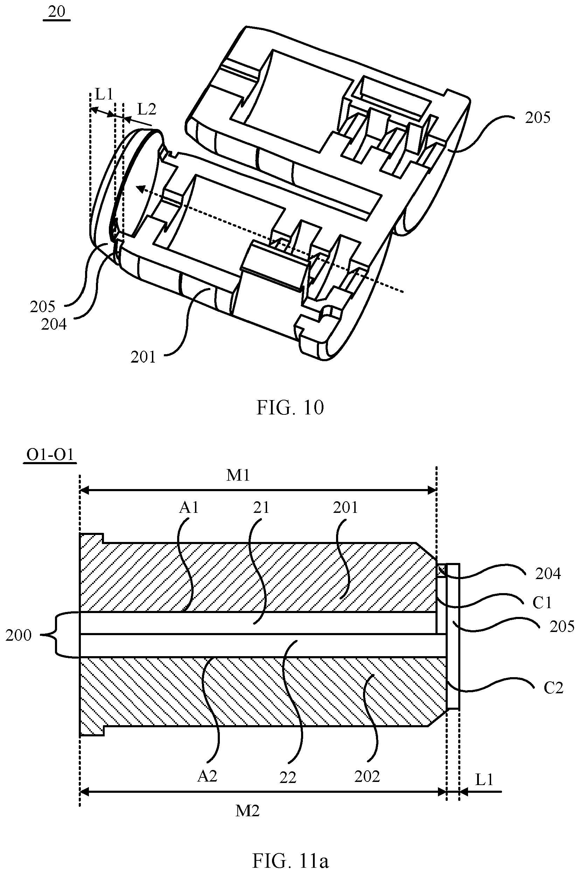

In some embodiments of this application, in terms of any tearing member 204 shown in FIG. 8a or FIG. 8b, as shown in FIG. 10, in a cabling direction of the optical cable (a direction indicated by a dotted arrow in FIG. 10), a thickness L2 of the tearing member 204 is less than a thickness L1 of the protective cover 205. In this way, strength of a material of the tearing member 204 with the smaller thickness is decreased, so that the constructor tears off the protective cover 205 more easily.

It can be learnt from the foregoing that one part of the protective cover 205 is connected to the tearing member 204, and the other part of the protective cover 205 protrudes from the first end face C1. In this case, after the first clamping member 201 and the second clamping member 202 are joined, the part that is of the protective cover 205 and that protrudes from the first end face C1 can seal off the opening of the optical cable through hole 200 (as shown in FIG. 8a). To improve a seal-off effect of the protective cover 205 on the opening of the optical cable through hole 200, as shown in FIG. 11a (a cutaway view obtained through cutting along the dashed line O1-O1 shown in FIG. 2), after the first clamping member 201 and the second clamping member 202 are joined, the part that is of the protective cover 205 and that protrudes from the first end face C1 in the first clamping member 201 comes into contact with a second end face C2 that is of the second clamping member 202 and that is configured to lead out the optical cable.

In some embodiments of this application, as shown in FIG. 11a, all thicknesses L1 of the protective cover 205 may be equal. In this case, to enable the part that is of the protective cover 205 and that protrudes from the first end face C1 in the first clamping member 201 to come into contact with the second end face C2 in the second clamping member 202, a length M2 of the second clamping member 202 may be greater than a length M1 of the first clamping member 201.

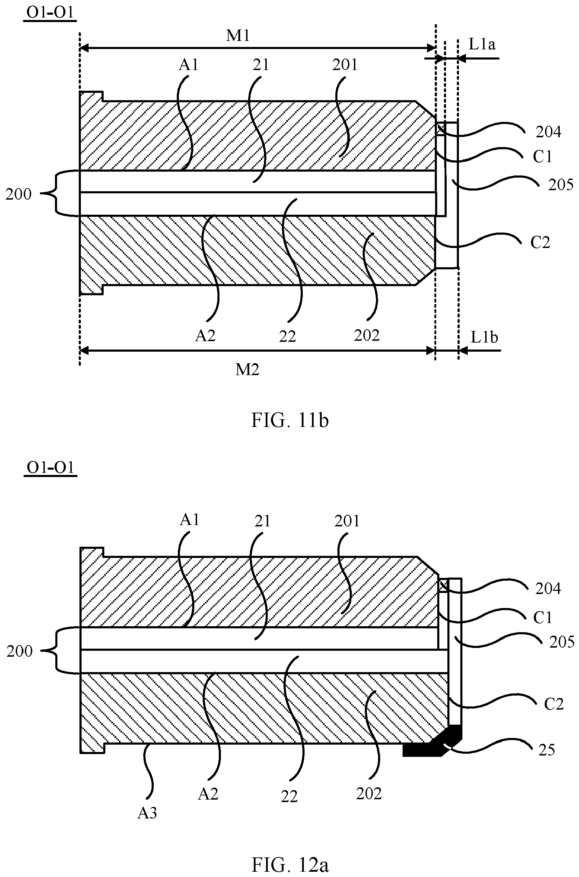

Alternatively, in some other embodiments of this application, as shown in FIG. 11b (a cutaway view obtained through cutting along the dashed line O1-O1 shown in FIG. 2), a length M2 of the second clamping member 202 is equal to a length M1 of the first clamping member 201. In this case, to enable the part that is of the protective cover 205 and that protrudes from the first end face C1 in the first clamping member 201 to come into contact with the second end face C2 in the second clamping member 202, a thickness L1b of the part that is of the protective cover 205 and that comes into contact with the second end face C2 in the second clamping member 202 is greater than a thickness L1a of the part that is of the protective cover 205 and that comes into contact with the first end face C1 in the first clamping member 201.

In addition, when the subscriber has not activated service subscription, to further improve sealing performance of the optical cable fastening structure 20 on the fiber outlet 101 that is on the optical cable connection apparatus 01 and improve the IP rating of the optical cable connection apparatus 01, the optical cable fastening structure 20 further includes a cladding member 25 shown in FIG. 12a (a cutaway view obtained through cutting along the dashed line O1-O1 shown in FIG. 2).

The cladding member 25 is connected to the part that is of the protective cover 205 and that protrudes from the first end face C1 in the first clamping member 201. In addition, when the first clamping member 201 and the second clamping member 202 are joined, the cladding member 25 covers a surface A3 that is of the second clamping member 202 and that is far away from the second fitting surface A2.

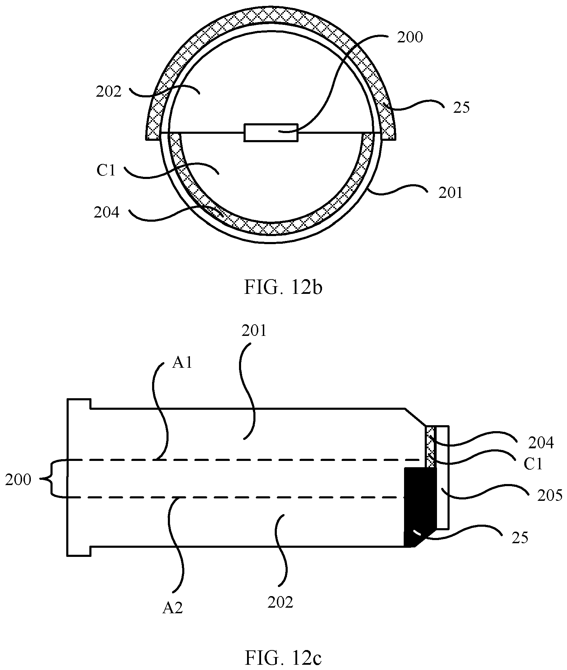

In this case, as shown in FIG. 12b, when the cladding member 25 is strip-shaped and is disposed along an edge of the protective cover (not shown in FIG. 12b), a first end (a left end) of the cladding member 25 covers a first end (a left end) of the tearing member 204, and a second end (a right end) of the cladding member 25 covers a second end (a right end) of the tearing member 204.

In this way, as shown in FIG. 12c, an assembly including the tearing member 204 and the cladding member 25 that are connected to the protective cover 205 can fully encircle a periphery at which the first clamping member 201 and the second clamping member 202 are joined and are close to an end of the protective cover 205, so that the optical cable through hole 200 formed between the first clamping member 201 and the second clamping member 202 is better sealed off at the opening close to an end of the protective cover 205.

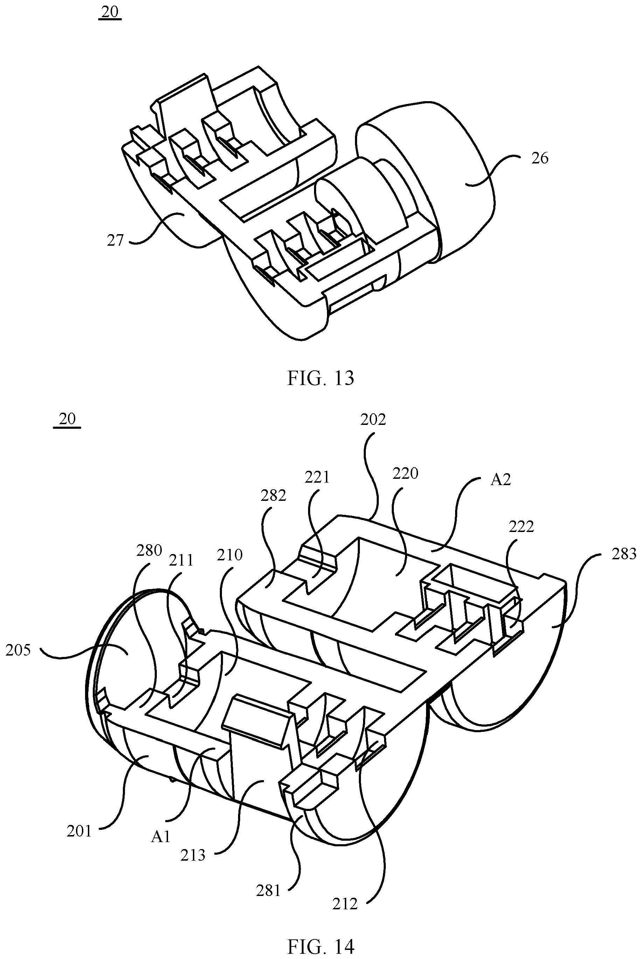

All of the protective cover 205, the tearing member 204, the cladding member 25, the first clamping member 201, and the second clamping member 202 may be made of plastic materials, so that the components in the optical cable fastening structure 20 formed by using a one-time composition technique constitute an integrated structure. In this way, compared with a split-type optical cable fastening structure 20 in FIG. 13 that is formed after two independent components, that is, a rubber part 26 and a plastic part 27, are in fit with each other, the optical cable fastening structure 20 having the integrated structure can reduce a probability of a component being missing in a process of constructing or maintaining the optical cable connection apparatus 01 by the constructor. In addition, when all the components in the optical cable fastening structure 20 having the integrated structure provided in this application are made of plastic materials, a fall-off phenomenon caused by creep deformation can be avoided during long-term use of the rubber part 26 made of a rubber material.

Moreover, in FIG. 13, after the subscriber activates service subscription, the rubber part 26 needs to be cut apart along an axis by using a cutting tool, so that the subscriber cable passes through the rubber part 26. In the optical cable fastening structure 20 provided in this embodiment of this application, after the subscriber activates service subscription, the constructor only needs to tear off the protective cover 205 without using a cutting tool. In this way, an operation process of fiber to the premises can be simpler.

It can be learnt from the foregoing that after the subscriber activates service subscription, joining the first clamping member 201 and the second clamping member 202 enables the first cable-through structure 21 on the first clamping member 201 and the second cable-through structure 22 on the second clamping member 202 to dock with each other, to form the optical cable through hole 200 for threading the subscriber cable. The optical cable through hole 200 may be used to support and fasten the subscriber cable. The following describes structures of the first cable-through structure 21 and the second cable-through structure 22 by using examples.

For example, the first cable-through structure 21 on the first clamping member 201 includes a first groove 210, a first cabling groove 211, and a first cable clip groove 212 that are shown in FIG. 14.

The first groove 210 is disposed on the first fitting surface A1 of the first clamping member 201, and includes a first outlet sidewall 280 close to the protective cover 205 and a first inlet sidewall 281 far away from the protective cover 205. The first cabling groove 211 is disposed on the first outlet sidewall 280 and is connected to the first groove 210. The first cable clip groove 212 is disposed on the first inlet sidewall 281 and is connected to the first groove 210.

In this way, the first cabling groove 211, the first cable clip groove 212, and the first groove 210 that are connected to each other constitute the first cable-through structure 21 in the first clamping member 201.

In addition, the second cable-through structure 22 on the second clamping member 202 includes a second groove 220, a second cabling groove 221, and a second cable clip groove 222 that are shown in FIG. 14.

The second groove 220 is disposed on the second fitting surface A2 of the second clamping member 202. In addition, the second groove 220 includes a second outlet sidewall 282 close to the protective cover 205 and a second inlet sidewall 283 far away from the protective cover 205. Moreover, the second cabling groove 221 is disposed on the second outlet sidewall 282 and is connected to the second groove 220. The second cable clip groove 222 is disposed on the second inlet sidewall 283 and is connected to the second groove 220.

In this way, the second groove 220, the second cabling groove 221, and the second cable clip groove 222 that are connected to each other constitute the second cable-through structure 22 in the second clamping member 202.

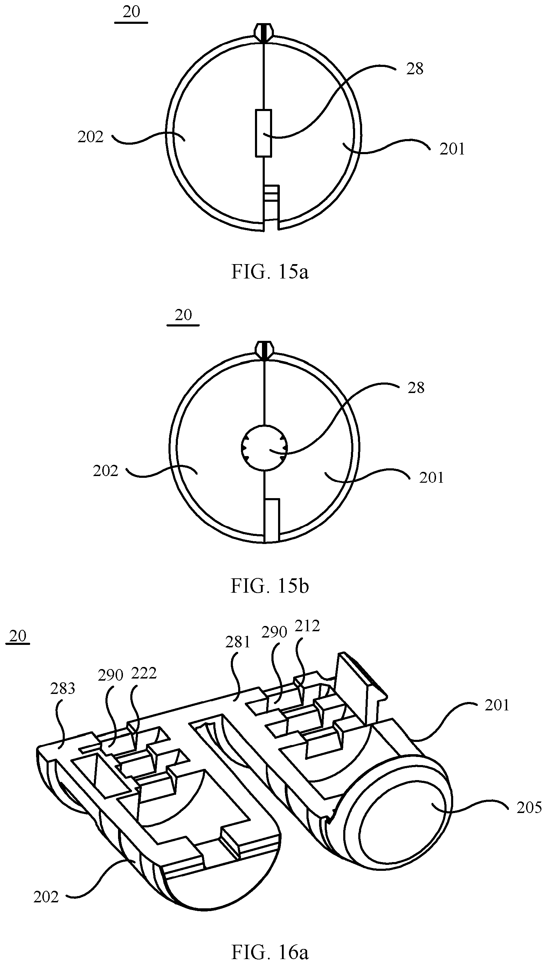

In this case, after the first clamping member 201 and the second clamping member 202 are joined, the first cabling groove 211 and the second cabling groove 221 are docked, to form a via 28 shown in FIG. 15a. The via 28 is configured to be in clearance fit with the subscriber cable, so that the subscriber cable can conveniently thread through the optical cable fastening structure 20. In addition, a shape of the via 28 formed after the first cabling groove 211 and the second cabling groove 221 are docked may match a cross sectional shape of the subscriber cable.

For example, when the subscriber cable is a butterfly-shaped cable or a flat optical cable, the via 28 may be rectangular-shaped shown in FIG. 15a.

It should be noted that the foregoing embodiment is described by using an example of the rectangular via 28 formed after the first cabling groove 211 and the second cabling groove 221 are docked. Depths of the first cabling groove 211 and the second cabling groove 221 are not limited in this application. In some other embodiments of this application, only the first cabling groove 211 may be disposed on the first outlet sidewall 280 of the first clamping member 201. In this case, when the first clamping member 201 and the second clamping member 202 are joined, the first cabling groove 211 and a surface that is of the second outlet sidewall 282 and that faces a groove bottom of the first cabling groove 211 may form a rectangular via 28. Likewise, only the second cabling groove 221 may be disposed on the second outlet sidewall 282 of the second clamping member 202. In this case, when the first clamping member 201 and the second clamping member 202 are joined, the second cabling groove 221 and a surface that is of the first outlet sidewall 280 and that faces a groove bottom of the second cabling groove 221 may form a rectangular via 28.

Alternatively, for another example, when the subscriber cable is a round drop cable, the via 28 may be circular-shaped shown in FIG. 15b.

In addition, after the first clamping member 201 and the second clamping member 202 are joined, location limiting needs to be performed on the subscriber cable within the optical cable through hole 200 formed after the first cable-through structure 21 on the first clamping member 201 and the second cable-through structure 22 on the second clamping member 202 are docked, so that the optical cable through hole 200 can be in interference fit with the subscriber cable, thereby reducing a probability that the subscriber cable moves when being used by a subscriber. In view of this, as shown in FIG. 16a, the optical cable fastening structure 20 further includes at least one first stopper bump 290 that is disposed on a groove bottom of the first cable clip groove 212 and a groove bottom of the second cable clip groove 222.

The first stopper bump 290 is configured to perform location limiting on the subscriber cable. After the first clamping member 201 and the second clamping member 202 are joined, the first stopper bump 290 enables a via formed after the first cable clip groove 212 having the first stopper bump 290 and the second cable clip groove 222 having the first stopper bump 290 are docked to be in interference fit with the subscriber cable. This reduces a probability that the subscriber cable moves in the optical cable fastening structure 20.

In addition, the subscriber cable may further be supported by using the via formed after the first cable clip groove 212 having the first stopper bump 290 and the second cable clip groove 222 having the first stopper bump 290 are docked.

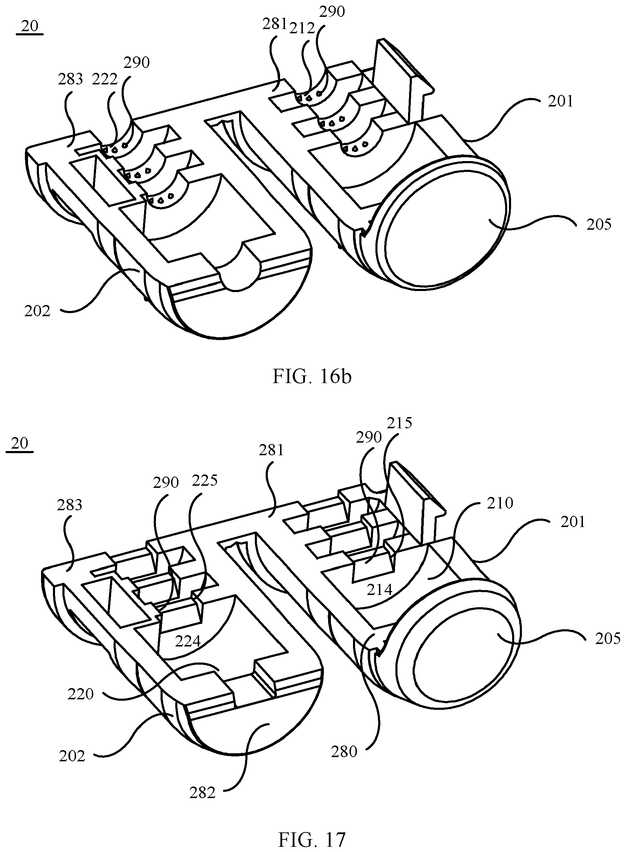

In some embodiments of this application, as shown in FIG. 16a, a longitudinal cross-section (the longitudinal cross-section is perpendicular to the cabling direction of the subscriber cable) of the first stopper bump 290 is a trapezoid. Alternatively, in some other embodiments of this application, as shown in FIG. 16b, a longitudinal cross-section of the first stopper bump 290 is a triangle. Alternatively, a longitudinal cross-section of the first stopper bump 290 may be a rectangle.

Moreover, to further improve a location limiting effect of the optical cable through hole 200, which is formed after the first cable-through structure 21 on the first clamping member 201 and the second cable-through structure 22 on the second clamping member 202 are docked, on the subscriber cable, as shown in FIG. 17, the first cable-through structure 21 further includes at least one first stiffener 214 and at least one third cable clip groove 215.

The first stiffener 214 is located inside the first groove 210, and the first stiffener 214 is disposed in parallel to the first outlet sidewall 280. One third cable clip groove 215 is disposed on one first stiffener 214 and is connected to the first groove 210.

In addition, the second cable-through structure 22 further includes at least one second stiffener 224 and at least one fourth cable clip groove 225.

The second stiffener 224 is located inside the second groove 220, and the second stiffener 224 is disposed in parallel to the second outlet sidewall 282. One fourth cable clip groove 225 is disposed on one second stiffener 224 and is connected to the second groove 220.

In addition, the optical cable fastening structure 20 further includes at least one first stopper bump 290 that is disposed on a groove bottom of the third cable clip groove 215 and a groove bottom of the fourth cable clip groove 225. The first stopper bump 290 is configured to perform location limiting on the optical cable. After the first clamping member 201 and the second clamping member 202 are joined, the first stopper bump 290 enables a via formed after the third cable clip groove 215 having the first stopper bump 290 and the fourth cable clip groove 225 having the first stopper bump 290 are docked to be in interference fit with the subscriber cable.

## Claims

1. An optical cable fastening structure (20), comprising:
a first clamping member (201), wherein a first cable-through structure (21) is provided on a first fitting surface (A1) that is of the first clamping member (201) and that is configured to fasten an optical cable;
a second clamping member (202), wherein a second cable-through structure (22) is provided on a second fitting surface (A2) that is of the second clamping member (202) and that is configured to fasten the optical cable;
a fastener (203), wherein the first clamping member (201) and the second clamping member (202) are joined and detachably connected by using the fastener (203), at least a part of the first fitting surface (A1) of the first clamping member (201) comes into contact with at least a part of the second fitting surface (A2) of the second clamping member (202) under the action of the fastener (203), and the first cable-through structure (21) and the second cable-through structure (22) are joined, to form an optical cable through hole (200) for the optical cable to pass through; and the optical cable through hole (200) is in interference fit with the optical cable;
a tearing member (204), connected to a first end face (C1) that is of the first clamping member (201), the first end face (C1) being configured to lead out the optical cable;
a protection cover (205), wherein one part of the protection cover (205) is connected to the tearing member (204), the other part of the protection cover (205) protrudes from the first end face (C1), the protective cover (205) covers an opening of the optical cable through hole (200) when the first clamping member (201) and the second clamping member (202) are joined by using the fastener (203), and the tearing member (204) and the protective cover (205) seal the optical cable through hole (200); and
wherein the tearing member (204) is strip-shaped and is disposed along an edge of the protective cover (205) such that the protective cover (205) is configured to be torn off at a location of the tearing member (204).

2. The optical cable fastening structure (20) according to claim 1, wherein the first clamping member (201) and the second clamping member (202) are joined, and the part that is of the protective cover (205) and that protrudes from the first end face (C1) comes into contact with a second end face (C2) that is of the second clamping member

3. The optical cable fastening structure (20) according to claim 2, wherein the optical cable fastening structure (20) further comprises a cladding member (25), wherein
the cladding member (25) is connected to the part that is of the protective cover (205) and that protrudes from the first end face (C1); and the cladding member (25) is configured to: when the first clamping member (201) and the second clamping member (202) are joined, cover a surface that is of the second clamping member (202) and that is far away from the second fitting surface.

4. The optical cable fastening structure (20) according to claim 3, wherein the cladding member (25) is strip-shaped and is disposed along the edge of the protective cover (205).

5. The optical cable fastening structure (20) according to claim 1, wherein the cladding member (25) is strip-shaped and is disposed along the edge of the protective cover (205); and
a first end of the cladding member (25) covers a first end of the tearing member (204), and a second end of the cladding member (25) covers a second end of the tearing member (204).

6. The optical cable fastening structure (20) according to any one of claims 1 to 5, wherein in a cabling direction of the optical cable, a thickness (L2) of the tearing member (204) is less than a thickness (L1) of the protective cover (205).

7. The optical cable fastening structure (20) according to any one of claims 2 to 6, wherein an end that is of the protective cover (205) and that is far away from the first clamping member (201) and the second clamping member (202) is provided with a chamfer (D).

8. The optical cable fastening structure (20) according to claim 1, wherein the fastener (203) comprises a clip (213) and a slot that are buckled; and
the clip (213) is connected to the first clamping member (201) and the slot is located on the second fitting surface; or
the clip (213) is connected to the second clamping member (202) and the slot (223) is located on the first fitting surface (A1).

9. The optical cable fastening structure (20) according to claim 1, wherein
the first cable-through structure (21) comprises:
a first groove (210), disposed on the first fitting surface (A1), and comprising a first outlet sidewall (280) close to the protective cover (205) and a first inlet sidewall (281) far away from the protective cover (205);
a first cabling groove (211), disposed on the first outlet sidewall (280) and connected to the first groove (210); and
a first cable clip groove (212), disposed on the first inlet sidewall (281) and connected to the first groove (210), wherein
the second cable-through structure (22) comprises:
a second groove (220), disposed on the second fitting surface (A2) and comprising a second outlet sidewall (282) close to the protective cover (205) and a second inlet sidewall far away from the protective cover (205);
a second cabling groove (221), disposed on the second outlet sidewall (282) and is connected to the second groove (220); and
a second cable clip groove (222), disposed on the second inlet sidewall and connected to the second groove (220), wherein
a via (28) formed after the first cabling groove (211) and the second cabling groove (221) are joined is in clearance fit with the optical cable; and
the optical cable fastening structure (20) further comprises at least one first stopper bump (290) that is disposed on a groove bottom of the first cable clip groove (212) and a groove bottom of the second cable clip groove (222); and the first stopper bump (290) is configured to perform location limiting on the optical cable, so that a via (28) formed after the first cable clip groove (212) having the first stopper bump (290) and the second cable clip groove (222) having the first stopper bump (290) are joined is in interference fit with the optical cable.

10. The optical cable fastening structure (20) according to claim 9, wherein
the first cable-through structure (21) further comprises:
at least one first stiffener (214), located inside the first groove (210) and disposed in parallel to the first outlet sidewall (280); and
at least one third cable clip groove (215), wherein one third cable clip groove (215) is disposed on one first stiffener (214) and is connected to the first groove (210); and
the second cable-through structure (22) further comprises:
at least one second stiffener (224), located inside the second groove (220) and disposed in parallel to the second outlet sidewall (282); and
at least one fourth cable clip groove (225), wherein one fourth cable clip groove (225) is disposed on one second stiffener (224) and is connected to the second groove (220), wherein
the optical cable fastening structure (20) further comprises at least one first stopper bump (290) that is disposed on a groove bottom of the third cable clip groove (215) and a groove bottom of the fourth cable clip groove (225); and the first stopper bump (290) is configured to perform location limiting on the optical cable, so that a via (28) formed after the third cable clip groove (215) having the first stopper bump (290) and the fourth cable clip groove (225) having the first stopper bump (290) are joined is in interference fit with the optical cable.

11. The optical cable fastening structure (20) according to claim 9 or 10, wherein a longitudinal cross-section of the first stopper bump (290) is a trapezoid, a triangle, or a rectangle; and
the longitudinal cross-section is perpendicular to a cabling direction of the optical cable.

12. The optical cable fastening structure (20) according to any one of claims 1 to 11,
wherein the optical cable fastening structure (20) further comprises a plurality of second stopper bumps (29, 290); and
the second stopper bump (29) is disposed on a part, configured to be in fit with a fiber outlet, in a surface that is of the first clamping member (201) and that is far away from the first fitting surface (A1); and is disposed on a part, configured to be in fit with the fiber outlet, in the surface that is of the second clamping member (202) and that is far away from the second fitting surface.

13. The optical cable fastening structure (20) according to any one of claims 1 to 12,
wherein the optical cable fastening structure further comprises a connection strip (24); and
the connection strip (24) is located between the first clamping member (201) and the second clamping member (202), one end of the connection strip (24) is connected to the first clamping member (201), and the other end of the connection strip (24) is connected to the second clamping member (202).

14. The optical cable fastening structure (20) according to any one of claims 1 to 3, wherein the optical cable fastening structure further comprises an opening groove (23); and
the opening groove (23) is disposed on the first fitting surface (A1), the first clamping member (201) and the second clamping member (202) are joined, and there is a gap (H1) between a groove bottom of the opening groove (23) and the second fitting surface (A2); or
the opening groove (23) is disposed on the second fitting surface (A2), the first clamping member (201) and the second clamping member (202) are joined, and there is the gap (H1) between a groove bottom of the opening groove (23) and the first fitting surface (A1).

15. An optical cable connection apparatus (01), comprising: a box, at least one fiber outlet (101) disposed on the box, and at least one of the optical cable fastening structures (20) according to any one of claims 1 to 14, wherein
one optical cable fastening structure (20) is in fit with one fiber outlet (101), and an end at which a protective cover (205) is located in the optical cable fastening structure (20) is located outside the box.

## Patentansprüche

1. Befestigungsstruktur für optische Kabel (20), umfassend:
ein erstes Klemmelement (201), wobei eine erste Kabeldurchführungsstruktur (21) auf einer ersten Passfläche (A1) vorgesehen ist, die zu dem ersten Klemmelement (201) gehört, und die dazu konfiguriert ist, ein optisches Kabel zu befestigen;
ein zweites Klemmelement (202), wobei eine zweite Kabeldurchführungsstruktur (22) auf einer zweiten Passfläche (A2) vorgesehen ist, die zu dem zweiten Klemmelement (202) gehört und die dazu konfiguriert ist, das optische Kabel zu befestigen;
ein Befestigungselement (203), wobei das erste Klemmelement (201) und das zweite Klemmelement (202) unter Verwendung des Befestigungselements (203) zusammengefügt und lösbar verbunden sind, wobei mindestens ein Teil der ersten Passfläche (A1) des ersten Klemmelements (201) unter der Wirkung des Befestigungselements (203) mit mindestens einem Teil der zweiten Passfläche (A2) des zweiten Klemmelements (202) in Kontakt kommt, und die erste Kabeldurchführungsstruktur (21) und die zweite Kabeldurchführungsstruktur (22) miteinander verbunden sind, um ein Durchgangsloch für optische Kabel (200) zu bilden, durch das das optische Kabel hindurchgeführt werden kann; und das Durchgangsloch für optische Kabel (200) in Presspassung mit dem optischen Kabel ist;
ein Abreißelement (204), das mit einer ersten Stirnfläche (C1) verbunden ist, die zu dem ersten Klemmelement (201) gehört, wobei die erste Stirnfläche (C1) dazu konfiguriert ist, das optische Kabel herauszuführen;
eine Schutzabdeckung (205), wobei ein Teil der Schutzabdeckung (205) mit dem Abreißelement (204) verbunden ist, der andere Teil der Schutzabdeckung (205) von der ersten Stirnfläche (C1) vorsteht, die Schutzabdeckung (205) eine Öffnung des Durchgangslochs für optische Kabel (200) abdeckt, wenn das erste Klemmelement (201) und das zweite Klemmelement (202) unter Verwendung des Befestigungselements (203) verbunden sind, und das Abreißelement (204) und die Schutzabdeckung (205) das Durchgangsloch für optische Kabel (200) abdichten; und wobei das Abreißelement (204) streifenförmig ist und entlang einer Kante der Schutzabdeckung (205) so angeordnet ist, dass die Schutzabdeckung (205) dazu konfiguriert ist, an einer Stelle des Abreißelements (204) abgerissen zu werden.

2. Befestigungsstruktur für optische Kabel (20) gemäß Anspruch 1, wobei das erste Klemmelement (201) und das zweite Klemmelement (202) miteinander verbunden sind und der Teil der Schutzabdeckung (205), der von der ersten Stirnfläche (C1) vorsteht, mit einer zweiten Stirnfläche (C2) des zweiten Klemmelements (202) in Kontakt kommt.

3. Befestigungsstruktur für optische Kabel (20) gemäß Anspruch 2, wobei die Befestigungsstruktur für optische Kabel (20) ferner ein Ummantelungselement (25) umfasst, wobei
das Ummantelungselement (25) mit dem Teil der Schutzabdeckung (205) verbunden ist, der von der ersten Stirnfläche (C1) vorsteht; und das Ummantelungselement (25) so konfiguriert ist, dass es, wenn das erste Klemmelement (201) und das zweite Klemmelement (202) zusammengefügt sind, eine Fläche des zweiten Klemmelements (202) abdeckt, die weit von der zweiten Passfläche entfernt ist.

4. Befestigungsstruktur für optische Kabel (20) gemäß Anspruch 3, wobei das Ummantelungselement (25) streifenförmig ist und entlang der Kante der Schutzabdeckung (205) angeordnet ist.

5. Befestigungsstruktur für optische Kabel (20) gemäß Anspruch 1, wobei das Ummantelungselement (25) streifenförmig ist und entlang der Kante der Schutzabdeckung (205) angeordnet ist; und
ein erstes Ende des Ummantelungselements (25) ein erstes Ende des Abreißelements (204) bedeckt und ein zweites Ende des Ummantelungselements (25) ein zweites Ende des Abreißelements (204) bedeckt.

6. Befestigungsstruktur für optische Kabel (20) gemäß einem der Ansprüche 1 bis 5, wobei in einer Verkabelungsrichtung des optischen Kabels eine Dicke (L2) des Abreißelements (204) geringer als eine Dicke (L1) der Schutzabdeckung (205) ist.

7. Befestigungsstruktur für optische Kabel (20) gemäß einem der Ansprüche 2 bis 6, wobei ein Ende der Schutzabdeckung (205), das von dem ersten Klemmelement (201) und dem zweiten Klemmelement (202) weit entfernt ist, mit einer Abschrägung (D) versehen ist.

8. Befestigungsstruktur für optische Kabel (20) gemäß Anspruch 1, wobei das Befestigungselement (203) eine Klammer (213) und einen Schlitz umfasst, die geknickt sind; und
die Klammer (213) mit dem ersten Klemmelement (201) verbunden ist und sich der Schlitz auf der zweiten Passfläche befindet, oder
die Klammer (213) mit dem zweiten Klemmelement (202) verbunden ist und sich der Schlitz (223) auf der ersten Passfläche (A1) befindet.

9. Befestigungsstruktur für optische Kabel (20) gemäß Anspruch 1, wobei die erste Kabeldurchführungsstruktur (21) umfasst:
eine erste Nut (210), die auf der ersten Passfläche (A1) angeordnet ist und eine erste Auslassseitenwand (280) nahe der Schutzabdeckung (205) und eine erste Einlassseitenwand (281) weit entfernt von der Schutzabdeckung (205) umfasst;
eine erste Verkabelungsnut (211), die an der ersten Auslassseitenwand (280) angeordnet und mit der ersten Nut (210) verbunden ist; und
eine erste Kabelschellennut (212), die an der ersten Einlassseitenwand (281) angeordnet und mit der ersten Nut (210) verbunden ist, wobei die zweite Kabeldurchführungsstruktur (22) umfasst:
eine zweite Nut (220), die auf der zweiten Passfläche (A2) angeordnet ist und eine zweite Auslassseitenwand (282) nahe der Schutzabdeckung (205) und eine zweite Einlassseitenwand weit entfernt von der Schutzabdeckung (205) umfasst;
eine zweite Verkabelungsnut (221), die an der zweiten Auslassseitenwand (282) angeordnet und mit der zweiten Nut (220) verbunden ist; und
eine zweite Kabelschellennut (222), die an der zweiten Einlassseitenwand angeordnet und mit der zweiten Nut (220) verbunden ist, wobei
ein Durchgangsloch (28), das gebildet wird, nachdem die erste Verkabelungsnut (211) und die zweite Verkabelungsnut (221) verbunden sind, sich in Spielpassung mit dem optischen Kabel befindet; und
die Befestigungsstruktur für optische Kabel (20) ferner mindestens einen ersten Anschlaghöcker (290) umfasst, der auf einem Nutboden der ersten Kabelschellennut (212) und einem Nutboden der zweiten Kabelschellennut (222) angeordnet ist; und der erste Anschlaghöcker (290) dazu konfiguriert ist, eine Positionsbegrenzung an dem optischen Kabel durchzuführen, sodass ein Durchgangsloch (28), das gebildet wird, nachdem die erste Kabelschellennut (212) mit dem ersten Anschlaghöcker (290) und die zweite Kabelschellennut (222) mit dem ersten Anschlaghöcker (290) verbunden sind, sich in Presspassung mit dem optischen Kabel befindet.

10. Befestigungsstruktur für optische Kabel (20) gemäß Anspruch 9, wobei die erste Kabeldurchführungsstruktur (21) ferner umfasst:
mindestens eine erste Versteifung (214), die sich innerhalb der ersten Nut (210) befindet und parallel zu der ersten Auslassseitenwand (280) angeordnet ist; und
mindestens eine dritte Kabelschellennut (215), wobei eine dritte Kabelschellennut (215) an einer ersten Versteifung (214) angeordnet ist und mit der ersten Nut (210) verbunden ist; und
die zweite Kabeldurchführungsstruktur (22) ferner umfasst:
mindestens eine zweite Versteifung (224), die sich innerhalb der zweiten Nut (220) befindet und parallel zu der zweiten Auslassseitenwand (282) angeordnet ist; und
mindestens eine vierte Kabelschellennut (225), wobei eine vierte Kabelschellennut (225) an einer zweiten Versteifung (224) angeordnet ist und mit der zweiten Nut (220) verbunden ist, wobei
die Befestigungsstruktur für optische Kabel (20) ferner mindestens einen ersten Anschlaghöcker (290) umfasst, der auf einem Nutboden der dritten Kabelschellennut (215) und einem Nutboden der vierten Kabelschellennut (225) angeordnet ist; und der erste Anschlaghöcker (290) dazu konfiguriert ist, eine Positionsbegrenzung an dem optischen Kabel durchzuführen, sodass ein Durchgangsloch (28), das gebildet wird, nachdem die dritte Kabelschellennut (215) mit dem ersten Anschlaghöcker (290) und die vierte Kabelschellennut (225) mit dem ersten Anschlaghöcker (290) verbunden sind, sich in Presspassung mit dem optischen Kabel befindet.

11. Befestigungsstruktur für optische Kabel (20) gemäß Anspruch 9 oder 10, wobei
ein Längsquerschnitt des ersten Anschlaghöckers (290) ein Trapez, ein Dreieck oder ein Rechteck ist; und
der Längsquerschnitt rechtwinklig zu einer Verkabelungsrichtung des optischen Kabels verläuft.

12. Befestigungsstruktur für optische Kabel (20) gemäß einem der Ansprüche 1 bis 11, wobei die Befestigungsstruktur für optische Kabel (20) ferner eine Vielzahl von zweiten Anschlaghöckern (29, 290) umfasst; und
der zweite Anschlaghöcker (29) auf einem Teil angeordnet ist, das so konfiguriert ist, dass es mit einem Faserauslass in einer Oberfläche des ersten Klemmelements (201) zusammenpasst, die weit von der ersten Passfläche (A1) entfernt ist; und auf einem Teil angeordnet ist, das so konfiguriert ist, dass es mit dem Faserauslass in der Oberfläche des zweiten Klemmelements (202) zusammenpasst, die weit von der zweiten Passfläche entfernt ist.

13. Befestigungsstruktur für optische Kabel (20) gemäß einem der Ansprüche 1 bis 12, wobei die Befestigungsstruktur für optische Kabel ferner einen Verbindungsstreifen (24) umfasst; und
der Verbindungsstreifen (24) sich zwischen dem ersten Klemmelement (201) und dem zweiten Klemmelement (202) befindet, ein Ende des Verbindungsstreifens (24) mit dem ersten Klemmelement (201) verbunden ist und das andere Ende des Verbindungsstreifens (24) mit dem zweiten Klemmelement (202) verbunden ist.

14. Befestigungsstruktur für optische Kabel (20) gemäß einem der Ansprüche 1 bis 13, wobei die Befestigungsstruktur für optische Kabel ferner eine Öffnungsnut (23) umfasst; und
die Öffnungsnut (23) auf der ersten Passfläche (A1) angeordnet ist, das erste Klemmelement (201) und das zweite Klemmelement (202) miteinander verbunden sind und ein Spalt (H1) zwischen einem Nutboden der Öffnungsnut (23) und der zweiten Passfläche (A2) vorhanden ist; oder
die Öffnungsnut (23) auf der zweiten Passfläche (A2) angeordnet ist, das erste Klemmelement (201) und das zweite Klemmelement (202) miteinander verbunden sind und der Spalt (H1) zwischen einem Nutboden der Öffnungsnut (23) und der ersten Passfläche (A1) vorhanden ist.

15. Optische Kabelverbindungsvorrichtung (01), umfassend: ein Gehäuse, mindestens einen Faserauslass (101), der an dem Gehäuse angeordnet ist, und mindestens eine der Befestigungsstrukturen für optische Kabel (20) gemäß einem der Ansprüche 1 bis 14, wobei
eine Befestigungsstruktur für optische Kabel (20) mit einem Faserauslass (101) zusammenpasst und ein Ende, an dem sich eine Schutzabdeckung (205) in der Befestigungsstruktur für optische Kabel (20) befindet, sich außerhalb des Gehäuses befindet.

## Revendications

1. Structure de fixation de câble optique (20), comprenant :
un premier élément de serrage (201), dans laquelle une première structure de passage de câble (21) est prévue sur une première surface d'ajustement (A1) qui est du premier élément de serrage (201) et qui est configurée pour fixer un câble optique ;
un second élément de serrage (202), dans laquelle une seconde structure de passage de câble (22) est prévue sur une seconde surface d'ajustement (A2) qui est du second élément de serrage (202) et qui est configurée pour fixer le câble optique ;
un dispositif de fixation (203), dans laquelle le premier élément de serrage (201) et le second élément de serrage (202) sont joints et reliés de façon amovible en utilisant le dispositif de fixation (203), au moins une partie de la première surface d'ajustement (A1) du premier élément de serrage (201) entre en contact avec au moins une partie de la seconde surface d'ajustement (A2) du second élément de serrage (202) sous l'action du dispositif de fixation (203), et la première structure de passage de câble (21) et la seconde structure de passage de câble (22) sont j ointes, pour former un trou de passage de câble optique (200) pour que le câble optique passe à travers ; et le trou de passage de câble optique (200) est en ajustement avec serrage avec le câble optique ;
un élément de déchirure (204), relié à une première face d'extrémité (C1) qui est du premier élément de serrage (201), la première face d'extrémité (C1) étant configurée pour faire sortir le câble optique ;
un couvercle de protection (205), dans laquelle une partie du couvercle de protection (205) est reliée à l'élément de déchirure (204), l'autre partie du couvercle de protection (205) fait saillie à partir de la première face d'extrémité (C1), le couvercle de protection (205) couvre une ouverture du trou de passage de câble optique (200) lorsque le premier élément de serrage (201) et le second élément de serrage (202) sont joints en utilisant le dispositif de fixation (203), et l'élément de déchirure (204) et le couvercle de protection (205) ferment de façon hermétique le trou de passage de câble optique (200) ; et
dans laquelle l'élément de déchirure (204) est en forme de bande et est disposé le long d'un bord du couvercle de protection (205) de telle sorte que le couvercle de protection (205) soit configuré pour être déchiré à un emplacement de l'élément de déchirure (204).

2. Structure de fixation de câble optique (20) selon la revendication 1, dans laquelle le premier élément de serrage (201) et le second élément de serrage (202) sont joints, et la partie qui est du couvercle de protection (205) et qui fait saillie à partir de la première face d'extrémité (C1) entre en contact avec une seconde face d'extrémité (C2) qui est du second élément de serrage (202).

3. Structure de fixation de câble optique (20) selon la revendication 2, dans laquelle la structure de fixation de câble optique (20) comprend en outre un élément de gainage (25), dans laquelle
l'élément de gainage (25) est relié à la partie qui est du couvercle de protection (205) et qui fait saillie à partir de la première face d'extrémité (C1) ; et l'élément de gainage (25) est configuré pour : lorsque le premier élément de serrage (201) et le second élément de serrage (202) sont joints, couvrir une surface qui est du second élément de serrage (202) et qui est éloignée de la seconde surface d'ajustement.

4. Structure de fixation de câble optique (20) selon la revendication 3, dans laquelle l'élément de gainage (25) est en forme de bande et est disposé le long du bord du couvercle de protection (205).

5. Structure de fixation de câble optique (20) selon la revendication 1, dans laquelle l'élément de gainage (25) est en forme de bande et est disposé le long du bord du couvercle de protection (205) ; et
une première extrémité de l'élément de gainage (25) couvre une première extrémité de l'élément de déchirure (204), et une seconde extrémité de l'élément de gainage (25) couvre une seconde extrémité de l'élément de déchirure (204).

6. Structure de fixation de câble optique (20) selon l'une quelconque des revendications 1 à 5, dans laquelle, dans une direction de câblage du câble optique, une épaisseur (L2) de l'élément de déchirure (204) est inférieure à une épaisseur (L1) du couvercle de protection (205).

7. Structure de fixation de câble optique (20) selon l'une quelconque des revendications 2 à 6, dans laquelle une extrémité qui est du couvercle de protection (205) et qui est éloignée du premier élément de serrage (201) et du second élément de serrage (202) est pourvue d'un chanfrein (D).

8. Structure de fixation de câble optique (20) selon la revendication 1, dans laquelle le dispositif de fixation (203) comprend une pièce d'attache élastique (213) et une fente qui sont attachées ; et
la pièce d'attache élastique (213) est reliée au premier élément de serrage (201) et la fente est située sur la seconde surface d'ajustement ; ou
la pièce d'attache élastique (213) est reliée au second élément de serrage (202) et la fente (223) est située sur la première surface d'ajustement (A1).

9. Structure de fixation de câble optique (20) selon la revendication 1, dans laquelle la première structure de passage de câble (21) comprend :
une première rainure (210), disposée sur la première surface d'ajustement (A1), et comprenant une première paroi latérale de sortie (280) proche du couvercle de protection (205) et une première paroi latérale d'entrée (281) éloignée du couvercle de protection (205) ;
une première rainure de câblage (211), disposée sur la première paroi latérale de sortie (280) et reliée à la première rainure (210) ; et
une première rainure de pièce d'attache élastique de câble (212), disposée sur la première paroi latérale d'entrée (281) et reliée à la première rainure (210), dans laquelle
la seconde structure de passage de câble (22) comprend :
une seconde rainure (220), disposée sur la seconde surface d'ajustement (A2) et comprenant une seconde paroi latérale de sortie (282) proche du couvercle de protection (205) et une seconde paroi latérale d'entrée éloignée du couvercle de protection (205) ;
une seconde rainure de câblage (221), disposée sur la seconde paroi latérale de sortie (282) et reliée à la seconde rainure (220), et
une deuxième rainure de pièce d'attache élastique de câble (222), disposée sur la seconde paroi latérale d'entrée et reliée à la seconde rainure (220), dans laquelle
un trou de liaison (28), formé après que la première rainure de câblage (211) et la seconde rainure de câblage (221) sont jointes, est en ajustement avec jeu avec le câble optique ; et
la structure de fixation de câble optique (20) comprend en outre au moins une première butée d'arrêt (290) qui est disposée sur un fond de rainure de la première rainure de pièce d'attache élastique de câble (212) et un fond de rainure de la deuxième rainure de pièce d'attache élastique de câble (222) ; et la première butée d'arrêt (290) est configurée pour réaliser une limitation d'emplacement sur le câble optique, pour qu'un trou de liaison (28), formé après la première rainure de pièce d'attache élastique de câble (212) ayant la première butée d'arrêt (290) et la deuxième rainure de pièce d'attache élastique de câble (222) ayant la première butée d'arrêt (290) sont jointes, soit en ajustement avec serrage avec le câble optique.

10. Structure de fixation de câble optique (20) selon la revendication 9, dans laquelle la première structure de passage de câble (21) comprend en outre :
au moins une première pièce de renfort (214), située à l'intérieur de la première rainure (210) et disposée en parallèle à la première paroi latérale de sortie (280) ; et
au moins une troisième rainure de pièce d'attache élastique de câble (215), dans laquelle une troisième rainure de pièce d'attache élastique de câble (215) est disposée sur une première pièce de renfort (214) et est reliée à la première rainure (210) ; et
la seconde structure de passage de câble (22) comprend en outre :
au moins une seconde pièce de renfort (224), située à l'intérieur de la seconde rainure (220) et disposée en parallèle à la seconde paroi latérale de sortie (282) ; et
au moins une quatrième rainure de pièce d'attache élastique de câble (225), dans laquelle une quatrième rainure de pièce d'attache élastique de câble (225) est disposée sur une seconde pièce de renfort (224) et est reliée à la seconde rainure (220), dans laquelle
la structure de fixation de câble optique (20) comprend en outre au moins une première butée d'arrêt (290) qui est disposée sur un fond de rainure de la troisième rainure de pièce d'attache élastique de câble (215) et un fond de rainure de la quatrième rainure de pièce d'attache élastique de câble (225) ; et la première butée d'arrêt (290) est configurée pour réaliser une limitation d'emplacement sur le câble optique, pour qu'un trou de liaison (28), formé après que la troisième rainure de pièce d'attache élastique de câble (215) ayant la première butée d'arrêt (290) et la quatrième rainure de pièce d'attache élastique de câble (225) ayant la première butée d'arrêt (290) sont jointes, soit en ajustement avec serrage avec le câble optique.

11. Structure de fixation de câble optique (20) selon la revendication 9 ou 10, dans laquelle
une section transversale longitudinale de la première butée d'arrêt (290) est un trapézoïde, un triangle, ou un rectangle ; et
la section transversale longitudinale est perpendiculaire à une direction de câblage du câble optique.

12. Structure de fixation de câble optique (20) selon l'une quelconque des revendications 1 à 11, dans laquelle la structure de fixation de câble optique (20) comprend en outre une pluralité de secondes butées d'arrêt (29, 290) ; et
la seconde butée d'arrêt (29) est disposée sur une partie, configurée pour être en ajustement avec une sortie de fibre, dans une surface qui est du premier élément de serrage (201) et qui est éloignée de la première surface d'ajustement (A1) ; et est disposée sur une partie, configurée pour être en ajustement avec la sortie de fibre, dans la surface qui est du second élément de serrage (202) et qui est éloignée de la seconde surface d'ajustement.

13. Structure de fixation de câble optique (20) selon l'une quelconque des revendications 1 à 12, dans laquelle la structure de fixation de câble optique comprend en outre une bande de raccordement (24) ; et
la bande de raccordement (24) est située entre le premier élément de serrage (201) et le second élément de serrage (202), une extrémité de la bande de raccordement (24) est reliée au premier élément de serrage (201), et l'autre extrémité de la bande de raccordement (24) est reliée au second élément de serrage (202).

14. Structure de fixation de câble optique (20) selon l'une quelconque des revendications 1 à 3, dans laquelle la structure de fixation de câble optique comprend en outre une rainure d'ouverture (23) ; et
la rainure d'ouverture (23) est disposée sur la première surface d'ajustement (A1), le premier élément de serrage (201) et le second élément de serrage (202) sont joints, et il y a un espace (H1) entre un fond de rainure de la rainure d'ouverture (23) et la seconde surface d'ajustement (A2) ; ou
la rainure d'ouverture (23) est disposée sur la seconde surface d'ajustement (A2), le premier élément de serrage (201) et le second élément de serrage (202) sont joints, et il y a l'espace (H1) entre un fond de rainure de la rainure d'ouverture (23) et la première surface d'ajustement (A1).

15. Appareil de connexion de câble optique (01), comprenant : une boîte, au moins une sortie de fibre (101) disposée sur la boîte, et au moins une des structures de fixation de câble optique (20) selon l'une quelconque des revendications 1 à 14, dans laquelle une structure de fixation de câble optique (20) est en ajustement avec une sortie de fibre (101), et une extrémité à laquelle un couvercle de protection (205) est situé dans la structure de fixation de câble optique (20) est située à l'extérieur de la boîte.
